# EUROPEAN PATENT SPECIFICATION

(11) **EP 3 666 077 B1**
(45) Date of publication and mention of the grant of the patent: **25.08.2021**
(21) Application number: 18382922.5
(22) Date of filing: 13.12.2018
(51) Int. Cl.: A22C 11/12, B65B 51/05, F16B 15/08

(54) **SYSTEM FOR STAPLING SAUSAGE CASINGS**
SYSTEM ZUM HEFTEN VON WURSTHÜLLEN
SYSTÈME D'AGRAFAGE POUR CASIERS DE SAUCISSES

(43) Date of publication of application: 17.06.2020
(73) Proprietor: Lorenzo Noguera, Sagar, 08302 Mataro (ES)
(72) Inventor: Lorenzo Noguera, Sagar, 08302 Mataro (ES)
(74) Representative: Sugrañes, S.L.P.

(56) References cited:
- EP-A1- 3 388 692
- US-A- 3 210 835
- US-A- 4 571 805
- US-A- 5 586 424

## Description

### Technical field of the invention

The invention belongs to the field of manufacturing sausage and particularly to a system for stapling sausage casings.

### Background of the invention

The use of generally U-shaped staples, wherein two legs facing each other and a connection bridge are distinguished, for closing twisted ends of bags or tubular casings of sheets is widely known and applied in the sausage sector (see e.g. document US 5 586 424 A), specifically for closing intestine casings full of meat mass.

The gathering of individual staples forming a strip of staples, said staples being temporarily secured to each other by means of tape adhered to the staples is also a technique known for quite some time in this same sector for automating the successive feeding of staples to a stapler mechanism.

Conventionally, the stapler mechanism comprises a staple supply channel, with an inlet end and an outlet end; an anvil placed close to the outlet end of the supply channel; and a slidable punch with adjusting along the supply channel, all of this suitable so that a staple can be introduced into the supply channel through the inlet end and be pushed by the punch in the sliding thereof towards the outlet end and towards the anvil against which the aforementioned staples are flattened and the legs thereof shaped into closing, with the interposition of the casing to be closed.

Usually, the strip of staples is assembled to be slidable by a guide element such that the first staple is in a receiving area of the stapler mechanism, specifically on the inlet end of the supply channel and aligned with the punch. This staple stays free on the lower portion thereof due to the fact that the guide element ends before reaching the mouth of the supply channel, and it stays suspended from the strip by the tape which adheres the staples to each other.

The movement of the punch towards the supply channel pulls the staple from the strip and introduces it into the supply channel on the inside of which it will be dragged to the anvil.

A first objective of the invention is a solution for ensuring the correct alignment of the staple with respect to the receiving channel and of the staple with respect to the punch in the path thereof towards the supply channel. An incorrect alignment could cause a seizure in the stapler mechanism upon flattening the staple against the mouth of the inlet end of the supply channel without introducing it therein or blocking the supply channel preventing the correct performance of subsequent stapling operations.

It is also of interest that one same stapler mechanism be compatible with staples with a different configuration or size. The characteristics of the sausage and/or of the casing may require a slightly different staple in each case, which is able to hold the amount of material according to said characteristics. For example, staples with longer legs will be required when they have to hold a larger amount of material, and staples with shorter legs will be required when they have to hold less material.

Proposals are known wherein two side closing walls and a rear wall confine the staple in said receiving area. Nevertheless, when it is desired that the stapler mechanism be more versatile, the fixed distance separating said side closing walls must be greater in order to accommodate a greater diversity of staples. In practice, this means that when staples with short legs are used, wherein both do not reach or slide on said side closing walls, the staples being in a feeding position, said staples are not prevented from turning.

Likewise, even when the legs are able to touch or both remain very close to the side closing walls, this contact can be tangential and also may not prevent the rotation of the staples. And it is in this scope of the invention that it is seen that the U-shaped staples originally have the legs slightly divergent from each other and that the connection thereof with the joining bridge, and the shape of said joining bridge, is arched and preferably with a circumference arc for creating a clamp afterwards, when the legs are closed on the intestine casing, as homogeneously as possible along the outline thereof. This geometry does not precisely contribute to the fact that, even if there is an eventual support between the distal end of the legs and side closing walls, this support is enough to prevent the rotation of the staples.

Therefore, it is of interest to provide a technical solution which also overcomes these drawbacks.

### Description of the invention

The proposed system combines a succession of staples which are juxtaposed and related to each other in a separable manner, two legs facing each other and a connection bridge between said legs being distinguished in each staple; and a stapler mechanism with a staple supply channel having an inlet end and an outlet end and that is determined by at least one rear wall and two side closing walls; an anvil placed underneath and close to the outlet end of the supply channel; and a punch slidable along the supply channel, all of this suitable so that a staple can be introduced into the supply channel through the inlet end and be pushed by the punch in the sliding thereof towards the outlet end and towards the anvil against which the aforementioned staple is flattened and the legs thereof shaped into closing.

Essentially, the system is characterised in that the aforementioned rear wall of the supply channel extends, preferably without interruption, beyond the inlet end along a staple receiving area determining a rear receiving wall for the arrangement therein of the first staple of the succession of staples, at least this rear receiving wall having a protrusion formation which extends in the same direction that the supply channel extends and which determines a sort of rail for accommodating the staple and guiding it in the path thereof in the direction to the feeding channel, for which reason said protrusion formation has a width related to the separation between the legs of the staple in one area close to the connection bridge thereof, said staple being prevented or limited from rotation in the receiving area and in the movement thereof towards the supply channel by the inner face of the legs contacting with respective sides of the protrusion formation.

In turn, plan views and at least on the front side that faces the rear receiving wall when the staples are arranged in the aforementioned receiving area, the body of the staples has a groove with an outline and dimensions sufficient to prevent mechanical interference with the protrusion formation which alters the alignment of the staple with the punch and the aforementioned supply channel, for example, which would alter the coplanarity thereof.

The staples therefore are not guided from the outside, which requires widths for passage or guides in correspondence with the maximum width of the staples.

Therefore, the system is extremely versatile, such that a single stapler mechanism can be used for different staples, especially for one same type of staples varying the length of the legs between them while they keep a similar separation between the legs in an area adjacent to the joining bridge. Likewise, the system is compatible with staples with the legs slightly divergent between them.

Precisely in a variant wherein the legs of the staples are slightly divergent, it is envisaged that the two side closing walls of the supply channel also extend along the receiving area of the staple feeder determining corresponding side receiving walls, the width of the passage determined between these side receiving walls in the aforementioned receiving area being greater than the width of the passage determined between the side closing walls of the supply channel, a sufficiently subtle transition segment being distinguished between said side receiving walls and side closing walls of the feeding channel so as to cause the folding of the legs of the staple when the width thereof is greater than the width of passage of the supply channel and thus enabling the introduction thereof into the supply channel by pushing from the punch, thereby adjusting the legs on the side closing walls thereof.

Advantageously, the guiding of the staples in the receiving area is compatible with other needs or wants of a system for stapling casings for sausage, such as the fact that the staples fit within the supply channel.

The invention envisages the protrusion formation extending from the receiving area to the supply channel along the rear wall thereof, throughout at least one section thereof.

Likewise, at least another protrusion formation analogous to that of the rear receiving wall can extend along at least one section of the front wall of the supply channel. In this case, in correspondence with this other protrusion formation the staples have another groove with an outline and dimensions sufficient to prevent mechanical interference with this other protrusion formation during the movement of the staples along the supply channel.

In another embodiment, the protrusion formation or if applicable one of the protrusion formations is a projection with a transverse cross section configured as essentially rectangular, which determines a central support surface for the bridge of the staple and corresponding side support surfaces, each one for an edge of the inner face of a leg of the staple.

The punch of the system has a rear face, which slides facing the rear receiving walls of the receiving area and rear walls of the supply channel, which can have an outline in accordance with these in order to minimise the separation spaces between the punch and the walls and to perfect the guiding thereof.

### Brief description of the drawings

Figs. 1a to 1f schematically illustrate a sequence of a first dragging phase of a stapler in a conventional stapler mechanism, corresponding to dragging the stapler from the receiving area to the inlet end of the supply channel;
Fig. 2 is an isometric view of a system exemplifying the invention;
Figs. 3a to 3c are corresponding plan, side and cross-sectional views according to vertical cutting plane AA of the system of Fig. 2 without including the punch element therein;
Figs. 4a to 4d schematically illustrate a sequence of the first dragging phase of a stapler in another system according to the invention, corresponding to dragging the staple from the receiving area to the inlet area of the supply channel;
Figs 5a and 5b schematically illustrate other possible variants for the protrusion formation of, at least, the rear receiving wall in the staple receiving area;
Figs. 6a to 6d are corresponding front, side and cross-sectional views according to respective longitudinal AA and transverse BB cutting planes of a system according to the invention at a time of a second dragging phase of the staple, said staple being found in the supply channel;
Fig. 7 shows another variant of a system according to the invention, with respect to which Figs. 7a and 7b illustrate a sequence of a third dragging phase of a staple, corresponding to the dragging of the staple in the outlet end of the supply channel against the anvil; and
Fig. 8 shows another variant of a system according to the invention, with respect to which
Figs 9a and 9b illustrate a sequence of a third dragging phase of a staple, corresponding to the dragging of the staple on the outlet end of the supply channel against the anvil.

### Detailed description of the invention

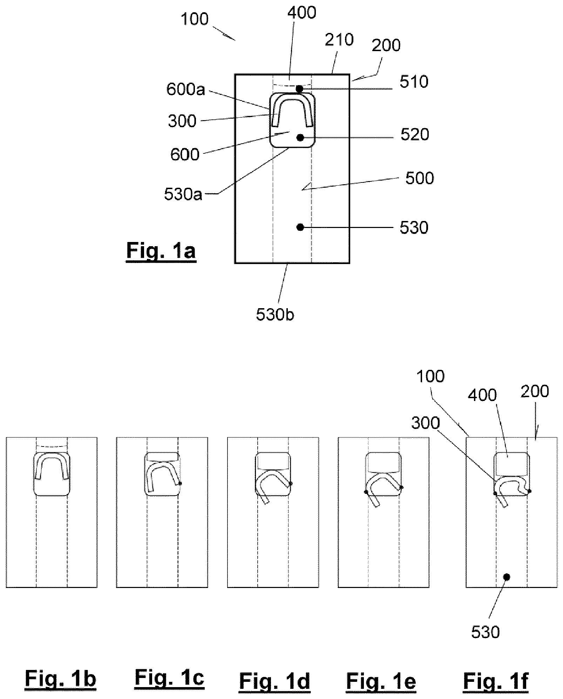

A conventional system 100 for applying staples 300 is partially shown in the sequence of Figs 1a to 1f.

The system 100 comprises a stapler mechanism 200 with a staple feeder 210 with an essentially oblong configuration which is usually vertically fastened in a chassis or frame and that is crossed from top to bottom by a hole 500 with a rectangular transverse cross section and smooth walls.

In a receiving area located in the upper half of the staple feeder 210 a receiving window 600a is formed which connects to the hole 500 and which determines a receiving area 600 which enables a staple 300 to be received such that it is arranged to be aligned with the hole 500. Thus, three sections are distinguished in the hole 500: an upper section 510 wherein the hole 500 has a closed cross section, a section 520 coinciding with the receiving area 600 wherein the hole 500 has an open cross section, and a lower section which is immediately below the receiving area 600 and which carries out, as explained below, the function of a staple supply channel 530.

The staple 300 being in this receiving area 600 (see Fig. 1a) when the stapler mechanism 200 performs a closing operation, the staple 300 is pushed by a punch 400 inserted in a sliding manner through the hole 500 and actuated downwards such that, in a first dragging phase, the staple 300 is moved until it is introduced through an inlet end 530a in the supply channel 530; and in a second dragging phase, the staple 300 is moved from the aforementioned inlet end 530a to the outlet end 530b of the supply channel 530 underneath which an anvil is located, not shown.

In an ideal stapling manoeuvre, the staple 300 moves in the same vertical plane, with respect to which the supply channel 530 and the punch 400 are coplanar.

It happens that despite the fact that the staple 300 is kept in this vertical plane, the staple can change the orientation thereof and rotate during the first dragging phase. This rotation can mean that the staple 300 does not correctly enter the supply channel 530. This situation is exemplified in the drawings of Figs. 1d to 1e.

When this happens, by the effects of the punch 400, the staple 300 is flattened against the mouth of the inlet end 530a of the supply channel 530, preventing a correct stapling operation. This fact significantly affects the productivity of the system, due to the occasional rejection of the product during manufacturing and momentarily stopping the manufacturing to remove the staple 300 from the stapler mechanism 200. This situation is represented in the drawing of Fig. 1f.

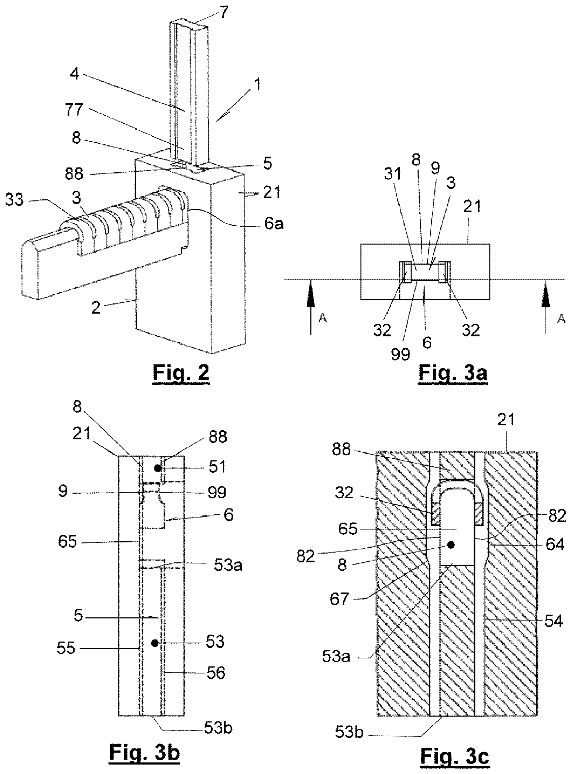

Figs. 2 and 3a to 3c schematically show a variant of a system 1 exemplifying the invention.

This system 1 combines a stapler mechanism 2 with a strip 33 of staples 3, both the stapler mechanism 2 and the staples 3 being especially designed to cooperate in a safer manner during the stapling operation.

The stapler mechanism 2 of the system 1 which is shown in Fig. 2 comprises a staple feeder 21, with an especially oblong configuration, with a similar shape to that of the system 100. The staple feeder 21 can be made of one part or, as explained later, can be made up of assembled portions, connected or joined to each other in a firm or mobile manner.

The staple feeder 21 is intended to be fastened essentially vertical and is crossed from top to bottom (in the direction of the drawings) by a hole 5. In the staple feeder 21 a staple 3 receiving window 6a connects to said hole 5 and defines a staple receiving area 6 underneath which the hole 5 carries out the function of a staple supply channel 53 (see Fig. 3b).

The stapler mechanism 2 is equipped with a slidable punch 4 adjusting along the hole 5. In each stapling cycle the punch 4 will first slide from a waiting position, wherein it leaves the receiving area 6 free, enabling a staple 3 to be received in a downwards direction dragging the staple until it is applied against the anvil; and, subsequently, in an upwards direction to recover the waiting position thereof and enable a new staple to be received. The punch 4 can be actuated manually or automatically. In any case, the mechanism which transmits these downward and upward movements to the punch are not explained in detail since they do not make up part of the invention.

Unlike the conventional system 100, in the system 1 exemplifying the invention, the hole 5 crossing the staple feeder 21 does not have a rectangular transverse cross section along all the length thereof.

Indeed, note that in system 1 the rear receiving wall 65 whereon the staple 3 is arranged or applied in the receiving area 6 of the staple feeder 21 is equipped with a protrusion formation 8 determining a sort of rail, the purpose of which is to accommodate the arranged staple 3 and guide it in the path thereof in the direction to the feeding channel 53 during the first dragging phase of the staple 3.

To this end, said protrusion formation 8 has a width related to the separation between the legs 32 of the staple 3 in an area adjacent to the connection bridge 31, with the goal of preventing or limiting the rotation of said staple 3 in the receiving area 6 and in the movement thereof towards the supply channel 53 by the inner face of the legs 32 contacting sides of the protrusion formation 8.

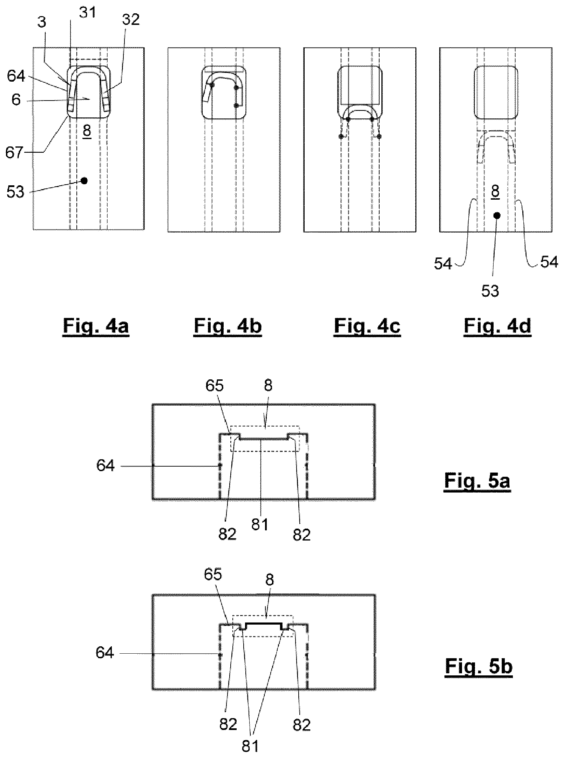

In this exemplary embodiment, the protrusion formation 8 is a projection with an essentially rectangular transverse cross section (see Fig. 5a), which determines a central support surface 81 for the bridge 31 of the staple 3 and corresponding side support surfaces 82, each one for an edge of the inner face of a leg 32 of the staple 3, all of this as shown in Figs. 3a to 3c.

The protrusion formation 8 formed, or added, to the rear receiving wall 65 of the receiving area 6 can extend to other sectors of the hole 5.

In the system 1, for example, this protrusion formation 8 extends uninterrupted along all the rear wall of the hole 5, also along the upper section 51 thereof and along the supply channel 53. Providing the protrusion formation 8 throughout the upper section 51 of the hole 5 contributes to the control of the movement of the punch 4 from the waiting position thereof; and providing the protrusion formation 8 throughout the supply channel 53 can contribute to the control of the movement of the staple especially when it juts out of the outlet end 53b and interacts with the anvil, as will be explained later.

Likewise, in the example system 1 the front wall 56 of the hole 5 is equipped with a protrusion formation 88 analogous to the protrusion formation 8 of the rear wall. Providing the analogous protrusion formation 88 throughout the upper section 51 of the hole 5 further contributes to the control of the movement of the punch 4 from the waiting position thereof; and providing the analogous protrusion formation 88 throughout the supply channel 53 can be beneficial under certain circumstances for increasing the control of the movement of the staple when it juts out from the outlet end 53b of the feeding channel.

In correspondence with the protrusion 8 and analogous 88 formations, the punch 4 (see Fig. 2) is equipped on the rear and front faces thereof, intended to stay facing the rear walls and front walls of the hole 5, with corresponding recesses 7 and 77. It can be of interest that mutual adjusting between these recesses 7, 77 and the protrusion 8 and analogous 88 formations, respectively, which naturally enables the sliding of the punch 4 through the hole 5 but with adjusting, contributes to perfecting the guiding of the punch 4 throughout the hole 5.

Other embodiments for the system 1 are possible, being able to vary the extension of the protrusion formation 8 throughout the hole 5 and providing it or not, as well as the extension thereof, of the analogous protrusion formation 88 throughout the hole 5. Likewise, it is also envisaged that, if it exists, the protrusion formation in the front wall of the hole 5 is different from the protrusion formation 8 of the rear receiving wall 65 of the receiving area or, if applicable, of all the rear wall of the hole 5.

Likewise, the width of the protrusion formation 8 can be constant or it can vary. In the examples, the width is constant throughout the length of the protrusion formation, a width that is determined by the distance separating the side surfaces 82, parallel to each other. The invention also envisages other variants, for example, wherein the width of the protrusion formation is reduced in the advance direction of the staples 3.

Fig. 2 and Figs. 3a to 3c show that, having seen the staple 3 in a plan view, the side of the staple 3 facing the rear wall of the hole 5 has a groove 9 with an outline and dimensions sufficient to prevent mechanical interference with the protrusion formation 8 during the presentation and receiving of the staple in the receiving area 6 and during the movement of the staple 3 in the direction to the supply channel 53. The groove 9 can be a negative of the protrusion formation 8. Preferably, the groove 9 is dimensioned such that the bridge 31 of the staple 3 rests in a sliding manner on the protrusion formation 8 without this resting action moving the staple 3 out of the ideal vertical plane of movement in the direction to the aforementioned supply channel 53.

In the example of the drawings, the staples 3 are symmetrical with respect to a longitudinal cutting plane and have identical grooves 9 and 99 on the two sides thereof. The invention envisages that the staples 3 of a system according to the invention have a groove 9 only on one side of the staple 3 which is facing the rear wall of the hole 5; that the staples have grooves 9 and 99 on both sides; and even in this latter case that the grooves on one side are different from the ones of the other side. Naturally, if there are protrusion formations on both the rear walls and front walls of the hole 5, the staple 3 will need to have two grooves, one on each side and configured to correspond with the associated protrusion formation of the wall whereon the staple slides in the staple feeder 21.

The staple 3 can be made starting from metal material in the form of a band which gives the staple 3 an oblong transverse cross section, in other words, with a width dimension, although it is variable, which is always greater than the thickness dimension thereof. In the example, the distal portion of the legs 32 of the staples 3 has a constant width, both edges of the legs being straight and parallel to each other. This distal portion of the legs 32 connects to the bridge 31, with a smaller width, by means of a short linking or transition portion with slightly curved edges. The width of the bridge 31 is constant, offering corresponding flat edges intended to slide on the protrusion formation or formations 8, 88. With all of this (see Fig. 3a) in the plan view, each staple 3 has a general H-shaped configuration.

Fig. 3c shows that, in the system 1 exemplifying the invention, in the receiving area 6 the side closing walls 64 of the hole 5 are at a greater distance than in, for example, the supply channel 53. This characteristic enables the staple feeder 21 to be more versatile and to be able to accommodate staples 3 with different shapes, for example, with different lengths for the legs 32. Also, although in Figs 3a to 3c a staple 3 has been shown, the legs 32 thereof being parallel, it is common and the invention envisages that the legs 32 of the staples are slightly divergent from each other, all of this as explained later in reference to Fig. 4a. In any case, note that these side closing walls 64 in the receiving area 6 are connected uninterrupted with the side closing walls 54 of the section of the hole 5 determining the supply channel 53 of the staples to the anvil, corresponding tilted, straight, curved or mixed transition sections 67 being distinguished, which converge to direct the legs 32 of the staples and direct them for the adequate insertion thereof in the aforementioned supply channel 53, occasionally folding them slightly.

The sequence of Figs. 4a to 4d enables the technical effect obtained by this particular configuration of the staple feeder 21 to be shown in order to understand a form of interest for the staples 3 according to another embodiment.

Specifically, in these staples 3, optimal for the implementation of the invention, the groove 9 completely affects the bridge portion 31 and part of both legs 32, originally slightly divergent from each other. For the rest, the staples 3 can be similar to the staples of Fig. 2.

Fig. 4a illustrates how the receiving area 6 is able to accommodate staples 3 of this type, meaning with slightly divergent legs 32, with a different length for the legs 32 thereof. To this end, in Fig. 4a on one same staple 3, legs with different lengths have been superimposed. With a lesser length of the legs 32 there is a larger clearance between these and the side closing walls 64 in the receiving area 6 and, consequently, there is a greater risk and/or tendency of the staple 3 to rotate during the first dragging phase of the staple 3 towards the supply channel 53 if there were no mechanical interference between it and the protrusion formation 8.

This mechanical interference which produces an anti-rotation effect of the staple 3 is schematically indicated in the sequence of Figs. 4b and 4c, having highlighted contact points between the protrusion formation 8 and the inner faces of the legs 32 of a staple 3. For the example, a staple 3 with short legs 32 has been selected, although with sufficient measurements so as to be slightly folded by the transition sections 67 upon inserting the staple 3 into the supply channel 54.

The moment shown in Fig. 4b intends to illustrate what occurs if the staple 3 tends to rotate, in this case, in a clockwise direction. This rotation will be prevented by the inner face of the right side leg 32 of the staple 3 contacting with the right side of the protrusion formation 8; and by the inner face of the leg 32 of the opposite side of the staple 3, in an area adjacent to the joining bridge 31, contacting with the left side of the protrusion formation. Depending on the original degree of divergence between the legs, and the straightness thereof, the location of the contact point or area between the leg 32 of the right side of the staple 3 with the right side of the protrusion formation 8 will vary.

Figs. 4c and 4d also include highlighted contact points between the outer faces of the legs 32 of the staple 3 and the side closing walls 54 of the supply channel 53. In order to achieve this effect, the original separation between the legs 32 of the staples must be such that they are required to be slightly folded, mutually getting closer to each other, due to the effect of the tilted transition sections 67. As disclosed later, the friction between the outer faces of the legs 32 of the staple 3 and the side closing walls 54 in the supply channel 53 ensures that the staples will advance along the aforementioned supply channel 53 as pushed by the punch 4 instead of the staples 3 falling due to gravity, without control of the advance, through said supply channel 53.

The anti-rotation effect can be provided by protrusion formations with configurations different from that with which the system 1 exemplifying the invention is equipped. Fig. 5b shows an alternative that would have an effect similar to that of the protrusion formation 8 of Fig. 5a. In this Fig. 5b, the same numerical references have been used to designate the portions that carry out a function equivalent to those of the protrusion 8 of the embodiment according to Fig. 5a. Other configurations are possible within the scope of the present invention, as long as they offer support surfaces for the inner face of the legs 32 of the staples to be used.

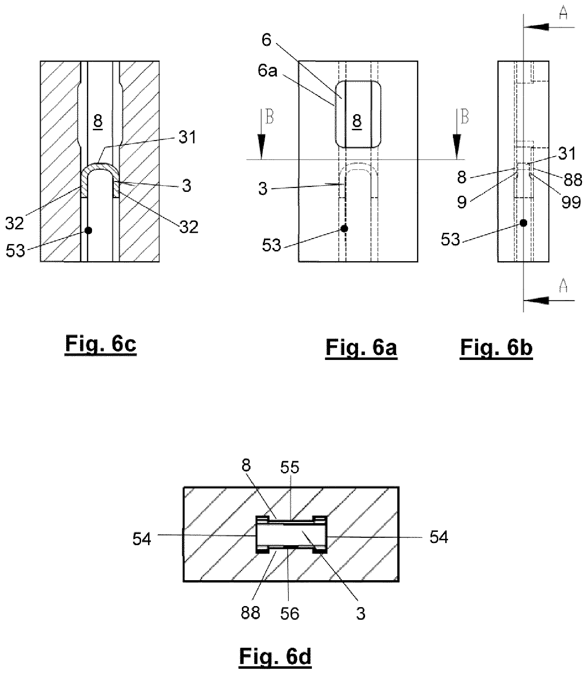

Figs. 6a to 6d show a moment during the second dragging phase of a staple 3, the staple 3 already being in the supply channel 53.

In this section of the hole 5 which determines the supply channel 53, the staple 3 moves in a fitted manner, the outside of the legs 32 making contact, at least on the lowest edge thereof, with the side closing walls 54 of the supply channel 53. Then the staple offers a slight resistance to the advance thereof while it is pushed by the punch 4 (not shown).

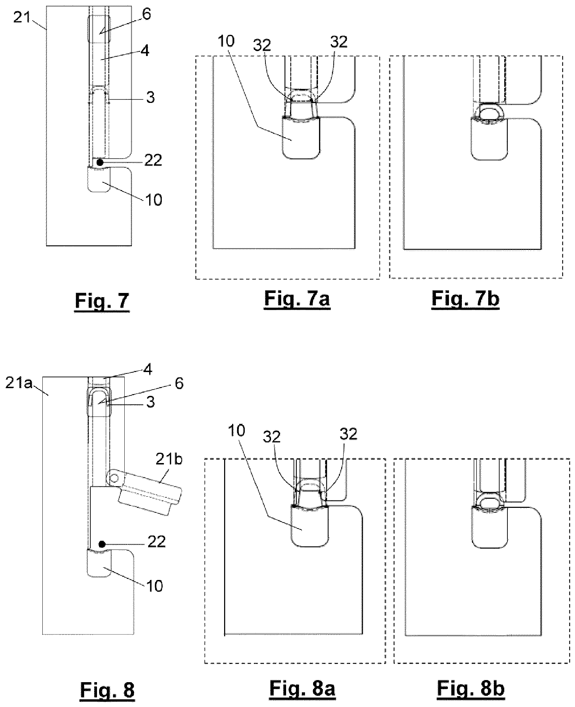

Figs. 7 and 8 show respective alternatives for a stapler mechanism 2 according to the invention, specifically insomuch as it relates to the constructive solution for the staple feeder 21, to the relation thereof with the anvil 10 and also with the casing to be stapled (not shown), for which the staple feeder 21 must be provided with an access opening 22 in order to be able to arrange said wrapping between the anvil 10 and the outlet end 53b of the staple supply channel 53.

Fig. 8 is used to show a variant of the invention according to which the supply channel 53 is determined by two portions of the staple feeder 21a and 21b which are joined and articulated.

For the variants of Figs. 7 and 8, the present description is completed with corresponding sequences of the final moments of the second dragging phase of a staple 3, specifically corresponding to immediately before the anvil 10 causes the legs 32 to be shaped into closing; and once the anvil 10 has shaped said legs 32, folding the legs 32 by collapsing them on the bridge 31.

The contribution of a protrusion formation 8 in one of the front walls or rear walls, in the example the rear wall 54, of the supply channel 53, in the vicinity of the outlet end 53a thereof may in certain circumstances contribute to preventing the rotation of the staple 3 moments before the legs 32 make contact with the anvil 10 and start a third dragging phase of said staple 3 (see Figs. 7a and 8a).

This circumstance can be of interest when staples 3 with very short legs 32 are selected, which at the outlet of the supply channel 53 and for a few moments can lose contact with the side closing walls 54 thereof without yet interacting with the anvil 10, being able to give rise to an unwanted rotation of the staples 3. Figs. 7a and 8a attempt to illustrate this circumstance, having highlighted contact points between a protrusion formation 8 and the inner faces of the legs 32 of the staple which contribute to controlling the rotation of this staple 3 with short legs 32 and therefore ensure a correct interaction with the anvil 10.

## Claims

1. A system (1) for stapling sausage casings, combining
- a succession of staples which are juxtaposed and related to each other in a separable manner, two legs facing each other (32) and a connection bridge (31) between the aforementioned legs being distinguished in each staple (3); and
- a stapler mechanism (2) with a staple supply channel (53) having an inlet end (53a) and an outlet end (53b) and that is determined by at least one rear wall (55) and two side closing walls (54); an anvil (10) placed underneath and close to the outlet end (53b) of the supply channel (53); and a punch (4) slidable along the supply channel (53), all of this suitable so that a staple (3) can be introduced into the supply channel (53) through the inlet end (53a) and be pushed by the punch (4) in the sliding thereof towards the outlet end (53b) and towards the anvil (10) against which the aforementioned staple (3) is flattened and the legs (32) thereof shaped into closing, the system being **characterised in that** the aforementioned rear wall (55) of the supply channel (53) extends beyond the inlet end (53a) along a staple (3) receiving area (6) determining a rear receiving wall (65) for the arrangement therein of the first staple (3) of the succession of staples, at least this rear receiving wall (65) having a protrusion formation (8) which extends in the same direction that the supply channel (53) extends and which determines a sort of rail for accommodating the staple (3) and guiding it in the path thereof in the direction to the feeding channel (53), for which reason said protrusion formation (8) has a width related to the separation between the legs (32) of the staple (3) in one area close to the connection bridge (31) thereof, said staple (3) being prevented or limited from rotation in the receiving area (6) and in the movement thereof towards the supply channel (53) by the inner face of the legs (32) contacting sides of the protrusion formation (8) **and in that,** seen in plan view, and at least on the front side which is facing the rear receiving wall (65) when the staples (3) are arranged in the aforementioned receiving area (6), the body of the staples (3) has a groove (9) with an outline and dimensions sufficient to prevent mechanical interference with the protrusion formation (8) which would alter the alignment of the staple (3) with the punch (4) and the aforementioned supply channel (53).

2. The system (1) according to the previous claim, **characterised in that** the two side closing walls (54) of the supply channel also extend along the receiving area (6) of the staple feeder (21) determining corresponding side receiving walls (64), the width of the passage determined between these side receiving walls (64) in the aforementioned receiving area (6) being greater than the width of the passage determined between the side closing walls (54) of the supply channel (53), a sufficiently subtle transition segment (67) being distinguished between said side receiving walls (64) and side closing walls (54) of the feeding channel (53) so as to cause the folding of the legs (32) of the staple (3) when the width thereof is greater than the width of passage of the supply channel (53) and thus enable the introduction thereof into the supply channel (53) by pushing from the punch (4), thereby adjusting the legs (32) on the side closing walls (54) thereof.

3. The system (1) according to claim 1 or 2, **characterised in that** the protrusion formation (8) extends from the receiving area (6) to the supply channel (53) along the rear wall (55) thereof, throughout at least one section thereof, or throughout the entirety thereof, said protrusion formation (8) extends.

4. The system (1) according to any one of the preceding claims, **characterised in that** another protrusion formation (88) analogous to that of the rear receiving wall (65) extends along at least one section of the front wall (56) of the supply channel (53), and **in that** in correspondence with this other protrusion formation (88) the staples (3) have another groove (99) with an outline and dimensions sufficient to prevent mechanical interference with this other protrusion formation (88) during the movement of the staples (3) along the supply channel (53).

5. The system (1) according to any one of the preceding claims, **characterised in that** the or, if appropriate, one of the protrusion formations (8, 88) is a projection with a transverse cross section configured as essentially rectangular, which determines a central support surface (8a) for the bridge of the staple (31) and corresponding side support surfaces (8b), each one for an edge of the inner face of a leg (32) of the staple (3).

6. The system (1) according to any one of the preceding claims, **characterised in that** the punch (4) has a rear face, which slides facing the rear receiving wall (65) of the receiving area (6) and rear wall (55) of the supply channel (53), with an outline in accordance with these.

## Patentansprüche

1. System (1) zum Heften von Wursthüllen, welches Folgendes kombiniert
- eine Reihenfolge von Heftklammern, welche nebeneinandergestellt sind und lösbar miteinander in Verbindung stehen, wobei zwei zugewandte Beine (32) und eine Verbindungsbrücke (31) zwischen den zuvor erwähnten Beinen in jeder Heftklammer (3) unterschieden werden; und
- einen Heftmechanismus (2) mit einem Heftklammern-Zuführkanal (53), welcher ein Eingangsende (53a) und ein Ausgangsende (53b) aufweist und welcher von mindestens einer Rückwand (55) und zwei seitlichen Schließwänden (54) bestimmt ist; einem Amboss (10), welcher unter und nah am Ausgangsende (53b) des Zuführkanals (53) platziert ist; und einem Stempel (4), welcher entlang des Zuführkanals (53) gleiten kann, all dies in geeigneter Weise, so das eine Heftklammer (3) in den Zuführkanal (53) durch das Eingangsende (53a) eingeführt werden kann und durch den Stempel (4) beim Gleiten desselben zum Ausgangsende (53b) hin und zum Amboss (10) hin gedrückt werden kann, gegen welchen die zuvor erwähnte Heftklammer (3) abgeflacht wird und die Beine (32) derselben schließend geformt werden, wobei das System **dadurch gekennzeichnet ist, dass** sich die zuvor erwähnte Rückwand (55) des Zuführkanals (53) über das Eingangsende (53a) hinaus erstreckt, entlang eines Empfangsbereich (6) für Heftklammern (3), welcher eine Rückempfangswand (65) für die Anordnung darin der ersten Heftklammer (3) der Reihenfolge von Heftklammern bestimmt, wobei mindestens diese Rückempfangswand (65) eine Erhebungsausbildung (8) aufweist, welche sich in die gleiche Richtung erstreckt, in die sich der Zuführkanal (53) erstreckt, und welche eine Art Schiene zum Aufnehmen der Heftklammer (3) und zum Führen derselben im Weg derselben in Richtung zum Einspeisekanal (53) bestimmt, aus welchem Grund die genannte Erhebungsausbildung (8) eine Breite aufweist, welche mit dem Abstand zwischen den Beinen (32) der Heftklammer (3) in einem Bereich nah an der Verbindungsbrücke (31) derselben in Verbindung steht, wobei die Rotation der genannten Heftklammer (3) im Empfangsbereich (6) und die Bewegung derselben zum Zuführkanal (53) hin von der Innenfläche der Beine (32), die mit den Seiten der Erhebungsausbildung (8) in Kontakt kommen, verhindert oder begrenzt wird, und dass, in Draufsicht gesehen, und mindestens auf der Vorderseite, welche der Rückempfangswand (65) zugewandt ist, wenn die Heftklammern (3) im zuvor erwähnten Empfangsbereich (6) angeordnet sind, der Körper der Heftklammern (3) eine Nut (9) aufweist, mit einer Kontur und Abmessungen, die ausreichend sind, um eine mechanische Interferenz mit der Erhebungsausbildung (8) zu verhindern, welche die Ausrichtung der Heftklammer (3) mit dem Stempel (4) und dem zuvor erwähnten Zuführkanal (53) stören würde.

2. System (1) nach dem vorhergehenden Anspruch, **dadurch gekennzeichnet, dass** sich die zwei seitlichen Schließwände (54) des Zuführkanals auch entlang des Empfangsbereichs (6) der Heftklammer-Einspeiseeinrichtung (21), welche entsprechende seitliche Empfangswände (64) bestimmt, erstrecken, wobei die Breite des Durchgangs, welcher zwischen diesen seitlichen Empfangswänden (64) im zuvor erwähnten Empfangsbereich (6) bestimmt wird, größer als die Breite des Durchgangs, welcher zwischen den seitlichen Schließwänden (54) des Zuführkanals (53) bestimmt wird, ist, wobei ein ausreichend subtiles Übergangssegment (67) zwischen den genannten seitlichen Empfangswänden (64) und seitlichen Schließwänden (54) des Einspeisekanals (53) unterschieden wird, um das Biegen der Beine (32) der Heftklammer (3) hervorzurufen, wenn die Breite derselben größer als die Breite des Durchgangs des Zuführkanals (53) ist, und somit das Einführen derselben in den Zuführkanal (53) zu ermöglichen, indem vom Stempel (4) aus gedrückt wird, wodurch die Beine (32) auf den seitlichen Schließwänden (54) desselben eingestellt werden.

3. System (1) nach Anspruch 1 oder 2, **dadurch gekennzeichnet, dass** sich die Erhebungsausbildung (8) vom Empfangsbereich (6) bis zum Zuführkanal (53) entlang der Rückwand (55) desselben erstreckt, über mindestens einen Abschnitt desselben, oder über der Gesamtheit desselben, wo sich die genannte Erhebungsausbildung (8) erstreckt.

4. System (1) nach einem der vorhergehenden Ansprüche, **dadurch gekennzeichnet, dass** sich eine andere Erhebungsausbildung (88), welche zu derjenigen der Rückempfangswand (65) analog ist, entlang mindestens eines Abschnitts der Vorderwand (56) des Zuführkanals (53) erstreckt, und dass dieser anderen Erhebungsausbildung (88) entsprechend die Heftklammern (3) eine andere Nut (99) aufweisen, mit einer Kontur und Abmessungen, die ausreichend sind, um eine mechanische Interferenz mit dieser anderen Erhebungsausbildung (88) während der Bewegung der Heftklammern (3) entlang des Zuführkanals (53) zu verhindern.

5. System (1) nach einem der vorhergehenden Ansprüche, **dadurch gekennzeichnet, dass** die oder, gegebenenfalls, eine der Erhebungsausbildungen (8, 88) ein Vorsprung mit einem transversalen Querschnitt, welcher im Wesentlichen rechteckig ausgebildet ist, ist, welcher eine zentrale Stützfläche (8a) für die Brücke der Heftklammer (31) und entsprechende seitliche Stützflächen (8b), jeweils für einen Rand der Innenfläche eines Beins (32) der Heftklammer (3), bestimmt.

6. System (1) nach einem der vorhergehenden Ansprüche, **dadurch gekennzeichnet, dass** der Stempel (4) eine hintere Fläche aufweist, welche der Rückempfangswand (65) des Empfangsbereichs (6) und der Rückwand (55) des Zuführkanals (53) zugewandt gleitet, mit einer dazu entsprechenden Kontur.

## Revendications

1. Système (1) d'agrafage pour casiers de saucisses, qui combine
- une succession d'agrafes qui sont juxtaposées et reliées entre elles de manière séparable, deux pattes orientées l'une vers l'autre (32) et un pont de connexion (31) entre les pattes mentionnées antérieurement étant distingués sur chaque agrafe (3) ; et
- un mécanisme d'agrafeuse (2) avec un canal d'alimentation d'agrafes (53) qui a une extrémité d'entrée (53a) et une extrémité de sortie (53b) et qui est déterminé par au moins une paroi arrière (55) et deux parois de fermeture latérales (54) ; une enclume (10) placée dessous et près de l'extrémité de sortie (53b) du canal d'alimentation (53) ; et un poinçon (4) qui peut glisser le long du canal d'alimentation (53), tout ceci adéquat de manière à ce qu'une agrafe (3) peut être introduite dans le canal d'alimentation (53) à travers l'extrémité d'entrée (53a) et peut être poussée par le poinçon (4) dans le glissement de celui-ci vers l'extrémité de sortie (53b) et vers l'enclume (10) contre laquelle s'aplatit l'agrafe (3) mentionnée antérieurement et les pattes (32) de celle-ci se configurent pour se fermer, le système étant **caractérisé en ce que** la paroi arrière (55) mentionnée antérieurement du canal d'alimentation (53) s'étend au-delà de l'extrémité d'entrée (53a) le long d'une zone de réception (6) d'agrafe (3) qui détermine une paroi de réception arrière (65) pour la disposition sur celle-ci de la première agrafe (3) de la succession d'agrafes, au moins cette paroi de réception arrière (65) ayant une formation en saillie (8) qui s'étend dans la même direction que celle dans laquelle s'étend le canal d'alimentation (53) et qui détermine un type de rail pour loger l'agrafe (3) et la guider dans la trajectoire de celle-ci dans la direction du canal d'alimentation (53), raison pour laquelle ladite formation en saillie (8) a une largeur en relation avec la séparation entre les pattes (32) de l'agrafe (3) dans une zone près du pont de connexion (31) de celle-ci, empêchant ou limitant que ladite agrafe (3) tourne dans la zone de réception (6) et dans le mouvement de celle-ci vers le canal d'alimentation (53) par la face interne des pattes (32) qui entrent en contact avec des côtés de la formation en saillie (8) et **en ce que**, vu en plan, et au moins sur le côté avant qui est orienté vers la paroi de réception arrière (65) lorsque les agrafes (3) sont disposées dans la zone de réception (6) mentionnée antérieurement, le corps des agrafes (3) a une rainure (9) avec un contour et des dimensions suffisants pour empêcher l'interférence mécanique avec la formation en saillie (8) ce qui altérerait l'alignement de l'agrafe (3) avec le poinçon (4) et le canal d'alimentation (53) mentionné antérieurement.

2. Système (1) selon la revendication précédente, **caractérisé en ce que** les deux parois de fermeture latérales (54) du canal d'alimentation s'étendent aussi le long de la zone de réception (6) de l'alimentateur d'agrafes (21) qui détermine des parois de réception latérales correspondantes (64), la largeur du passage déterminé entre ces parois de réception latérales (64) dans la zone de réception (6) mentionnée antérieurement étant plus grande que la largeur du passage déterminé entre les parois de fermeture latérales (54) du canal d'alimentation (53), un segment de transition suffisamment subtil (67) étant distingué entre lesdites parois de réception latérales (64) et parois de fermeture latérales (54) du canal d'alimentation (53) pour provoquer le pliage des pattes (32) de l'agrafe (3) lorsque la largeur de celle-ci est plus grande que la largeur du passage du canal d'alimentation (53) et permettre par conséquent l'introduction de celle-ci dans le canal d'alimentation (53) en poussant depuis le poinçon (4), ajustant de cette manière les pattes (32) sur les parois de fermeture latérales (54) de celui-ci.

3. Système (1) selon la revendication 1 ou 2, **caractérisé en ce que** la formation en saillie (8) s'étend depuis la zone de réception (6) jusqu'au canal d'alimentation (53) le long de la paroi arrière (55) de celui-ci, à travers au moins une section de celle-ci, ou à travers la totalité de celle-ci, s'étend ladite formation en saillie (8).

4. Système (1) selon l'une quelconque des revendications précédentes, **caractérisé en ce qu'**une autre formation en saillie (88) analogue à celle de la paroi de réception arrière (65) s'étend le long d'au moins une section de la paroi avant (56) du canal d'alimentation (53), et **en ce que**, en correspondance avec cette autre formation en saillie (88), les agrafes (3) ont une autre rainure (99) avec un contour et des dimensions suffisants pour empêcher l'interférence mécanique avec cette autre formation en saillie (88) pendant le mouvement des agrafes (3) le long du canal d'alimentation (53).

5. Système (1) selon l'une quelconque des revendications précédentes, **caractérisé en ce que** la ou, le cas échéant, une des formations en saillie (8, 88) est une protubérance avec une section transversale configurée comme essentiellement rectangulaire, qui détermine une surface d'appui central (8a) pour le pont de l'agrafe (31) et des surfaces d'appui latérales (8b) correspondantes, chacune pour un bord de la face interne d'une patte (32) de l'agrafe (3).

6. Système (1) selon l'une quelconque des revendications précédentes, **caractérisé en ce que** le poinçon (4) présente une face arrière, qui glisse orientée vers la paroi de réception arrière (65) de la zone de réception (6) et la paroi arrière (55) du canal d'alimentation (53), avec un contour selon celles-ci.
